# EUROPÄISCHE PATENTSCHRIFT

(11) **EP 2 042 447 B1**
(45) Veröffentlichungstag und Bekanntmachung des Hinweises auf die Patenterteilung: **15.06.2011**
(21) Anmeldenummer: 08016846.1
(22) Anmeldetag: 25.09.2008
(51) Int. Cl.: B65G 1/137

(54) **Kommissioniervorrichtung**
Commissioning system
Système de commissionnement

(30) Priorität: 25.09.2007 DE 102007045978
(43) Veröffentlichungstag der Anmeldung: 01.04.2009
(73) Patentinhaber: KHT Kommissionier- und Handhabungstechnik GmbH, 45881 Gelsenkirchen (DE)
(72) Erfinder: Gessner Jürgen, 42781 Haan (DE); Radtke Michael, 45527 Hattingen (DE)
(74) Vertreter: Tilmann, Max Wilhelm

(56) Entgegenhaltungen:
- EP-A- 0 742 164
- WO-A-03/043913
- DE-A1- 10 349 354
- DE-U1- 20 305 240
- DE-U1-202006 014 375
- FR-A- 2 788 753
- US-A- 5 174 454
- US-A1- 2004 040 975
- US-A1- 2005 276 679

## Beschreibung

Die Erfindung betrifft eine Kommissioniervorrichtung gemäß dem Oberbegriff des Anspruchs 1.

Bekannte Systeme zum Einlagern von Stückgut, wie beispielsweise Kommissioniervorrichtungen für Medikamentenpackungen, die in Apotheken eingesetzt werden, weisen das Problem auf, dass die Stückgüter, wie beispielsweise Medikamentenpackungen, einem Roboter übergeben werden müssen, ohne dass eine Gefahr für das Bedienpersonal entsteht.

Im Stand der Technik ist es bekannt und üblich, die Ware über ein Förderband in den Arbeitsbereich zu transportieren, da es sich hierbei um eine kostengünstige technische Lösung handelt. Allerdings muss das Band, wenn eine Packung plaziert wurde, weiterbewegt werden, um eine neue freie Ablagefläche zu generieren. Wenn das Band sich bewegt, bewegen sich alle Packungen auf diesem Band. Bewegen sich die Packungen, kann der Roboter jedoch nur nach den sich bewegenden Packungen greifen, wenn ein hoher Aufwand bezüglich der Steuerung des Roboters betrieben wird, von dem aus Kostengründen jedoch regelmäßig abgesehen wird. Bei Systemen, bei denen der Roboter bei stillstehendem Band nach der Packung greift, kann das Band nicht gleichzeitig eine neue freie Fläche bereitstellen. Da ein Roboter, bevor dieser anfährt, sein Ziel kennen muss, ist das Band für die gesamte Hinfahrt des Roboters zu der Greifposition und während des Greifens gesperrt. Nur beim Wegfahren des Roboters und während dieser die Packung einlagert kann es wieder bewegt werden und ist für das Ablegen einer neuen Packung bereit. 50% der Zeit ist das Band daher blockiert. Zudem dürfen die Packungen nicht das Bandende erreichen, ohne abgenommen zu werden, da ansonsten eine Weiterbewegung des Bands blockiert ist.

Alternativ ist es bekannt, eine Tür in einem Regalsegment vorzusehen und auf der gegenüberliegenden Seite des Regals, d.h. auf Seite, die sich zu dem Robotergang öffnet, ein auf- und abfahrbares Rollo vorzusehen. Durch ein solches Rollo kann diese Seite verschlossen werden, wodurch eine Schleuse entsteht. Dabei wird das Rollo heruntergefahren, die Tür geöffnet und das Regal manuell befüllt. Die Tür wird daraufhin wieder verschlossen und das Rollo hochgefahren. Der Roboter tastet dann das Regalsegment nach Packungen ab und bringt die Packung zu einer Scannstation, nimmt sie dort wieder auf und legt sie an ihren endgültigen Platz im Regal. Diese Variante hat den Nachteil einer sehr geringen Geschwindigkeit. Zudem besteht das Problem, das sogenannte Rückläufer nicht schnell eingelagert werden können (Stückgüter, die bereits ausgegeben wurden und wieder eingelagert werden müssen), da nach dem Öffnen der Tür die Stückgüter neu gescannt werden müssen. Dies ist besonders problematisch in Apotheken, da die Ware im Computer (z.B. an der Kasse) als vorhanden gemeldet ist, aber nicht ausgegeben werden kann.

Die beiden bekanten Einlagerungssysteme beruhen darauf, dass das System befüllt wird, bis der Puffer aufgefüllt ist. In einem zweiten Schritt wird das System dann geleert. Dadurch entstehen unnötige Wartezeiten und es entsteht das Problem mit den Rückläufern.

Diese Wartezeiten wurden in DE 103 49 354 reduziert. Dieses Dokument beschreibt eine Kommissioniervorrichtung gemäß dem Oberbegriff des Anspruchs 1, wobei zwei Zugriffsöffnungen vorgesehen sind.

Der Erfindung liegt die Aufgabe zugrunde, ein System zu schaffen, bei dem mindestens einer der oben genannten Nachteile vermieden wird.

Diese Aufgabe wird gelöst durch den Gegenstand des unabhängigen Anspruchs 1. Vorteilhafte Ausführungsformen sind Gegenstand der abhängigen Patentansprüche und ergeben sich aus der nachfolgenden Beschreibung der Erfindung.

Die Erfindung kann durch entkoppelte Einlagerungselemente in Form von mindestens zwei, vorzugsweise drei oder mehr Schubladen verwirklicht werden.

Das Regalsegment kann dabei in mehrere Teilsegmente zerlegt sein. Jedes Teilsegment lässt sich selbständig abschotten. Somit kann ein Segment befüllt werden, während das andere automatisch entleert wird. Diese Abschottung erlaubt es, das im Stand der Technik bekannte zeitaufwendige Rollo zu vermeiden. Die Regalteilsegmente können seitlich beweglich und stirnseitig herausziehbar sein. Dadurch liegt der Bereich der manuellen Befüllung nicht im Zugriff des Roboters.

Ist die Schublade eingeschoben, kann der Roboter zugreifen, während der Zugriff für die Bedienperson versperrt ist.

Des weiteren kann das Ablegen einer Packung, z.B. in einer Dimension (z.B. Fachbodenebene), überwacht werden (beispielsweise durch eine Lichtschranke, eine sensible Oberfläche, die den Ort detektiert, oder eine Kamera). Dadurch kann zu jedem Zeitpunkt eine Schublade herausgezogen werden und die Packung zu den noch nicht eingelagerten Packungen hinzugelegt werden. Die Schublade(n), auf die gerade nicht zugegriffen wird, gibt ein Lichtsignal und ist entriegelt. So lässt sich auch das im Stande der Technik gegebene Rückläuferproblem lösen.

Das erfindungsgemäße System mit entkoppelten Einlagerungselementen kommt bei einer Kommissioniervorrichtung für Stückgüter (insbesondere für Arzneimittelpackungen) zum Einsatz, die weiterhin mindestens ein Regal mit Lagerplätzen zur Lagerung der Stückgüter und mindestens ein Regalbediengerät zum Ein- und/oder Auslagern der Stückgüter aufweist.

Die entkoppelten Einlagerungselemente können dann vorzugsweise in Form von Schubladenelementen ausgeführt sein, die in eine Außenverkleidung der Kommissioniervorrichtung integriert sein können. Die Schubladen können jeweils ein Teilsegment des Regals umfassen, das im eingeschobenen Zustand der Schubladen von dem Regalbediengerät und im herausgezogenen Zustand der Schubladen von einer Bedienperson erreichbar ist.

Alternativ können die als entkoppelte Einlagerungselemente dienenden Teilbereiche des Regals auch durch in die Außenverkleidung integrierte Türen oder Rollläden gegen einen zeitweise unbefugten Zugriff durch die Bedienperson abgeschlossen sein.

Ein Hantieren einer Bedienperson in dem Einlagerungspuffer und insbesondere ein Durchgreifen der Bedienperson durch das Regal kann durch eine Detektionseinrichtung, die vorzugsweise eine Lichtschranke umfassen kann, erkannt werden, woraufhin der Betrieb des Regalbediengeräts eingestellt werden.

Die Erfindung wird im folgenden anhand von teilweise in den Zeichnungen dargestellten Ausführungsbeispielen näher erläutert.

In den Zeichnungen zeigt:
- Fig. 1: ein Ausführungsbeispiel eines entkoppelten Schubladenpuffers als Bestandteil einer Kommissioniervorrichtung für Medikamentenpackungen,
- Fig. 2: einen vergrößerten Ausschnitt der Kommissioniervorrichtung der Fig. 1 und
- Fig. 3: die Kommissioniervorrichtung der Fig. 1 mit eingeschobenem Schubladenpuffer.

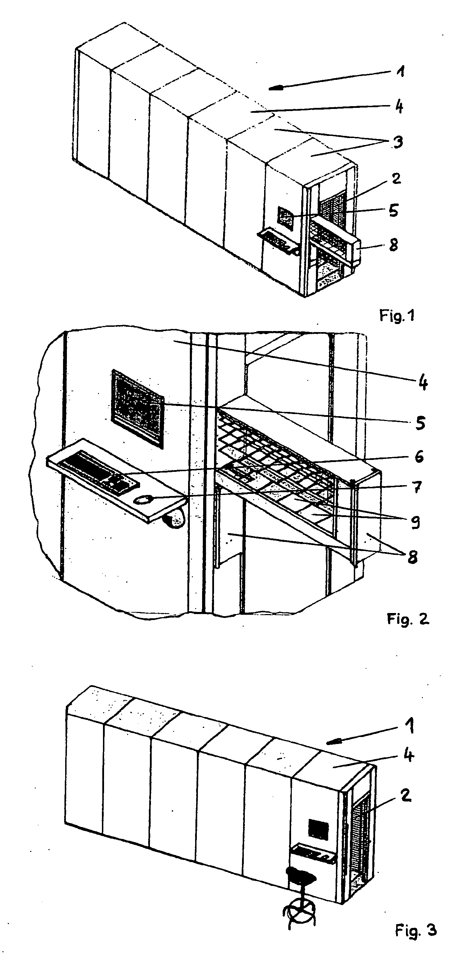

Die Fig. 1 bis 3 zeigen ein Ausführungsbeispiel einer Kommissioniervorrichtung, wie sie beispielsweise für die automatisierte Ein- und Auslagerung von Medikamentenpackungen in Apotheken eingesetzt wird.

Die Kommissioniervorrichtung 1 umfasst ein Regalsystem mit zwei parallel beabstandet zueinander angeordneten Regalreihen 2, die aus einzelnen, hintereinander angeordneten Regalsegmenten 3 bestehen. Die Regalwände sind von einem Gehäuse 4 umgeben. Im Bereich zwischen den zwei Regalreihen 2 ist ein Kommissionierroboter (nicht dargestellt) angeordnet, der entlang der Regalreihen und in der Höhe verfahrbar ist. Mit dem Kommissionierroboter werden Medikamentenpackungen, die auf einem Einlagerungssystem bereitgelegt werden, gegriffen und an einem von einer Steuerung der Kommissioniervorrichtung 1 bestimmten Ablageplatz in dem Regalsystem abgelegt. Wenn eine oder mehrere Medikamentenpackungen von einer Bedienperson angefordert werden, fährt der Kommissionierroboter die Lagerpositionen dieser Medikamentenpackung(en) an, greift und transportiert diese zu einer Ausgabeposition, an der die Medikamentenpackung(en) von der Bedienperson entgegen genommen werden können. Die Anforderung einer Medikamentenpackung kann über die mit einem Bildschirm 5, einer Tastatur 6 und einer Computermaus 7 versehene Steuerung der Kommissioniervorrichtung 1 erfolgen.

Die Einlagerung der Medikamentenpackungen erfolgt erfindungsgemäß über entkoppelte Einlagerungselemente in Form von zwei Schubladenelementen 8, die stirnseitig in der Nähe der Steuerung angeordnet sind. Die Schubladenelemente 8 stellen Teilsegmente des vordersten Regalsegments 3 dar und diese sind selbst mit mehreren Regalböden versehen, die wiederum in einzelne Ablageplätze 9 unterteilt sind. Solange die Schubladenelemente 8 eingeschoben sind, kann der Kommissionierroboter auf die Ablageplätze 9 zugreifen, um darauf abgelegte Medikamentenpackungen zu greifen und zu dem hierfür vorgesehenen Lagerplatz in dem Regalsystem zu transportieren. Solange die Schubladenelemente 8 herausgezogen sind, kann die Bedienperson Medikamentenpackungen, die eingelagert werden sollen, an den einzelnen Ablageplätzen 9 der Schubladenelemente 8 ablegen; ein Zugriff des Kommissionierroboters auf die Ablageplätze 9 ist zu diesem Zeitpunkt nicht möglich, so dass eine Verletzung der Bedienperson durch den Kommissionierroboter ausgeschlossen werden kann.

Die Kommissioniervorrichtung 1 ist weiterhin mit einem Verriegelungssystem (nicht dargestellt) versehen, das zumindest ein Herausziehen desjenigen Schubladenelements 8 verhindert, auf das der Kommissionierroboter gerade zugreift. Da der Kommissionierroboter stets nur auf eines der beiden Schubladenelemente 8 zugreifen kann, steht immer ein Schubladenelement 8 zur Einlagerung von Medikamentenpackungen durch die Bedienperson bereit. Ob ein Schubladenelement 8 herausgezogen werden kann, wird durch eine Bereitschaftsleuchte signalisiert, die je nach Bereitschaft des jeweiligen Schubladenelements entweder grün oder rot leuchtet.

Das Ablegen der Medikamentenpackungen an den Ablageplätzen 9 der Schubladenelemente 8 wird mittels einer Detektionseinrichtung (nicht dargestellt) registriert. Hierdurch kann dem Kommissionierroboter nach dem Schließen des entsprechenden Schubladenelements 8 ein Steuerungssignal gegeben werden, an welchen Ablageplätzen 9 Medikamentenpackungen bereit liegen, die eingelagert werden sollen. Die Detektionseinrichtung kann beispielsweise eine Lichtschranke, eine Kamera oder auch eine sensible Oberfläche umfassen.

Ein Durchgreifen der Bedienperson durch ein z.B. halbgeöffnetes Schubladenelement 8 kann dadurch verhindert werden, dass dies durch eine Detektionseinrichtung, wie beispielsweise eine Lichtschranke registriert wird, was zu einem sofortigen Stillstand des Kommissionierroboters führen kann. Hierbei kann/können vorzugsweise dieselbe(n) Lichtschranke(n) verwendet werden, die im vollständig geöffneten Zustand der Schubladenelemente 8 die Ablage der Medikamentenpackungen erkennen.

Auf eine Detektionseinrichtung zum Erkennen der Ablage einer Medikamentenpackung an einem (beliebigen) Ablageplatz 9 kann beispielsweise verzichtet werden, wenn sicher gestellt wird, dass die Medikamentenpackungen an definierten Ablageplätzen abgelegt werden. Beispielsweise kann vorgegeben werden, dass die Medikamentenpackungen von der Bedienperson in einer definierten Reihenfolge an den Ablageplätzen 9 abgelegt werden sollen (z.B. von oben nach unten und/oder von rechts nach links).

In einer alternativen Ausführungsform einer erfindungsgemäßen Kommissioniervorrichtung können anstelle der Schubladenelemente auch Türen oder Rollläden zum Einsatz kommen, um die Teilsegmente des Regalsegments, die als Einlagerungspuffer dienen, entweder vor einem Zugriff durch den Kommissionierroboter oder durch die Bedienperson zu schützen. Bezogen auf das Ausführungsbeispiel der Fig. 1 bis 3 können dann bei ansonsten identischer Kommissioniervorrichtung 1 die beiden Schubladenelemente 8 durch zwei Rollläden ersetzt werden, die beispielsweise im Bereich des Monitors 6 angeordnet sein können, und jeweils eine Öffnung in dem Gehäuse 4 abdecken, wobei die Bedienperson bei geöffneten Rollläden Medikamentenpackungen in den im Bereich der entsprechenden Öffnung liegenden Ablageplätzen des vordersten Regalsegments 3 ablegen kann. Auf der Rückseite dieser Regalreihe 2 können zwei identische Rollläden angeordnet sein, die immer dann geschlossen sind, wenn der entsprechende Rollladen an der Gehäuseaußenseite geöffnet ist (Beziehungsweise kann es sich hierbei jeweils um denselben Rollladen handeln, der zwischen der Vorder- und der Rückseite der Regalreihe 2 verfahren wird.). Dadurch kann verhindert werden, dass die Bedienperson durch das Regalsegment 3 hindurchgreift und dort mit dem Kommissionierroboter kollidiert. Dadurch kann eine Gefährdung der Bedienperson durch den Kommissionierroboter vermieden werden. Zusätzlich kann eine Detektionseinrichtung (hierbei kann es sich um dieselbe Detektionseinrichtung handeln, die auch zum Erkennen der Medikamentenpackungen vorgesehen ist), beispielsweise eine Lichtschranke, die Sicherheit für die Bedienperson erhöhen, indem diese während des Auf- und Abrollens der Rollläden, bei dem es zeitweise zu einer durchgehenden Öffnung von der Vorderseite der Regalreihe 2 in den Arbeitsbereich des Kommissionierroboters kommen kann, ein Hantieren der Bedienperson in dem Einlagerungspuffer und insbesondere ein Durchgreifen in den Arbeitsbereich des Kommissionierroboters erkennt und einen sofortigen Stillstand des Kommissionierroboters bewirkt. Sofern es nach dem vollständigen Schließen des hinteren Rollladens kann die Detektionseinrichtung dann wieder für das Erkennen der Medikamentenpackungen verwendet werden.

Ebenso wie die Schubladenelemente in dem Ausführungsbeispiel gemäß den Fig. 1 bis 3 können die Rollläden (oder auch entsprechende Türen) über ein Verriegelungssystem verschließbar sein, das ein Öffnen der von der Bedienperson erreichbaren Rollläden (bzw. Türen) nur dann zulässt, wenn der Kommissionierroboter nicht auf den entsprechenden Bereich zugreift und der entsprechende Rollladen (bzw. die entsprechende Tür) auf der gegenüberliegenden Seite der Regalreihe verschlossen ist.

## Patentansprüche

1. Kommissioniervorrichtung (1) für Stückgüter, insbesondere Arzneimittelpackungen, mit mindestens einem Regal mit Lagerplätzen zur Lagerung der Stückgüter, mindestens einem Regalbediengerät zum Ein- und/oder Auslagern der Stückgüter und einem System zum Einlagern der Stückgüter mit einem Einlagerungspuffer, der entkoppelte Einlagerungselemente aufweist, **dadurch gekennzeichnet, dass** die entkoppelten Einlagerungselemente entweder durch mindestens zwei Bereiche des Regals gebildet werden, die jeweils über eine in die Außenverkleidung integrierte Tür oder einen Rollladen vor einem Zugriff geschützt sind, wenn das Regalbediengerät auf den entsprechenden Bereich zugreift oder als Schubladen ausgebildet sind.

2. Kommissioniervorrichtung gemäß Anspruch 1, **dadurch gekennzeichnet, dass** zumindest das Regal mit einer Außenverkleidung versehen ist, wobei die Schubladen in die Außenverkleidung integriert sind, wobei sich der Stauraum der Schubladen im eingeschobenen Zustand in das Regal erstreckt, so dass er von dem Regalbediengerät erreichbar ist, wohingegen der Stauraum im herausgezogenen Zustand der Schubladen von außen zugänglich ist.

3. Kommissioniervorrichtung gemäß Anspruch 1oder 2, **gekennzeichnet durch** eine Detektionseinrichtung, die das Hantieren einer Bedienperson in dem Einlagerungspuffer und insbesondere ein Durchgreifen der Bedienperson **durch** das Regal erkennt und daraufhin den Betrieb des Regalbediengeräts einstellt.

4. Kommissioniervorrichtung gemäß Anspruch 3, **dadurch gekennzeichnet, dass** die Detektionseinrichtung eine Lichtschranke umfasst.

## Claims

1. Commissioning device (1) for piece goods, in particular medicament packages, having at least one shelf with storage areas for storing piece goods, at least one storage and retrieval machine for storing and/or retrieving the piece goods and a system for storing the piece goods with a storage buffer, which has decoupled storage elements, **characterised in that** the decoupled storage elements are either formed by at least two regions of the shelf, which are each protected against access by means of a door integrated into the outer covering or a roller shutter when the storage and retrieval machine accesses the corresponding region, or are designed as drawers.

2. Commissioning device according to Claim 1, **characterised in that** at least the shelf is provided with an outer covering, wherein the drawers are integrated into the outer covering, wherein the storage space of the drawers extends in the pushed-in state into the shelf such that it can be reached by the storage and retrieval machine, whereas the storage space in the pulled-out state of the drawers is accessible from the exterior.

3. Commissioning device according to Claim 1 or 2, **characterised by** a detection apparatus, which recognises when an operator is working in the storage buffer and in particular when the operator reaches into the shelf and immediately discontinues operation of the storage and retrieval machine.

4. Commissioning device according to Claim 3, **characterised in that** the detection apparatus comprises a photoelectric barrier.

## Revendications

1. Dispositif (1) de préparation de commandes pour des articles individuels, en particulier des emballages de médicaments, avec au moins un rayonnage pour le stockage des articles individuels, au moins un appareil de desserte de rayonnages pour emmagasiner et/ou déstocker les articles individuels, et un système pour emmagasiner les articles individuels avec une zone tampon d'emmagasinage qui présente des éléments d'emmagasinage désaccouplés, **caractérisé en ce que** les éléments d'emmagasinage désaccouplés, soit sont formés par au moins deux régions du rayonnage qui sont respectivement interdites d'accès, au moyen d'une porte intégrée dans l'habillage extérieur ou d'un volet roulant, lorsque l'appareil de desserte de rayonnages accède à la région correspondante, soit sont réalisés sous forme de tiroirs.

2. Dispositif de préparation de commandes selon la revendication 1, **caractérisé en ce qu'**au moins le rayonnage est pourvu d'un habillage extérieur, sachant que les tiroirs sont intégrés dans l'habillage extérieur, sachant que l'espace de rangement des tiroirs s'étend dans le rayonnage lorsque les tiroirs sont rentrés, de sorte qu'il peut être atteint par l'appareil de desserte de rayonnages, tandis que l'espace de rangement est accessible de l'extérieur lorsque les tiroirs sont déployés.

3. Dispositif de préparation de commandes selon la revendication 1 ou 2, **caractérisé par** un équipement de détection qui détecte les manoeuvres d'un opérateur dans la zone tampon d'emmagasinage et en particulier la traversée du rayonnage par l'opérateur, à la suite de quoi il arrête le fonctionnement de l'appareil de desserte de rayonnages.

4. Dispositif de préparation de commandes selon la revendication 3, **caractérisé en ce que** l'équipement de détection comprend une barrière lumineuse.
